# EUROPÄISCHE PATENTSCHRIFT

(11) **EP 2 283 069 B1**
(45) Veröffentlichungstag und Bekanntmachung des Hinweises auf die Patenterteilung: **07.03.2012**
(21) Anmeldenummer: 09783313.1
(22) Anmeldetag: 23.09.2009
(51) Int. Cl.: C08K 3/22, C08K 3/38, C09J 9/00, C09J 11/04

(54) **WÄRMELEITUNGSZUSAMMENSETZUNG**
HEAT CONDUCTION COMPOSITION
COMPOSITION CONDUCTRICE DE CHALEUR

(30) Priorität: 01.10.2008 DE 102008049849
(43) Veröffentlichungstag der Anmeldung: 16.02.2011
(73) Patentinhaber: TESA SE, 20253 Hamburg (DE)
(72) Erfinder: KEITE-TELGENBÜSCHER, Dr. Klaus, 22529 Hamburg (DE); STAIGER, Anja, 22459 Hamburg (DE); MEYER, Florian, 22089 Hamburg (DE)
(74) Vertreter: Stubbe, Andreas
(86) Internationale Anmeldenummer: PCT/EP2009/062305
(87) Internationale Veröffentlichungsnummer: WO 2010/037674

(56) Entgegenhaltungen:
- WO-A-2004/056914
- JP-A- 2008 031 358
- US-A- 6 096 414
- DATABASE WPI Week 200450 Thomson Scientific, London, GB; AN 2004-520424 XP002563220 & JP 2004 168870 A (HITACHI CHEM CO LTD) 17. Juni 2004 (2004-06-17)

## Beschreibung

Die Erfindung betrifft eine Wärmeleitungszusammensetzung umfassend zumindest ein Polymer und einen wärmeleitenden Hilfsstoff und die Verwendung dieser Wärmeleitungszusammensetzung zur Herstellung eines wärmeleitenden Flächenelements. Ferner betrifft die Erfindung ein wärmeleitendes Flächenelement mit einer solchen Wärmeleitungszusammensetzung sowie deren Verwendung zum Wärmetransport innerhalb elektronischer Geräte.

In vielen Technologiegebieten kommt der kontrollierten Wärmeübertragung eine bedeutende Rolle zu. Alle grundlegenden Problemstellungen betreffen hierbei den Transport thermischer Energie (Wärme) von einem Ort höherer Temperatur (Wärmequelle) zu einem Ort niedrigerer Temperatur (Wärmesenke) infolge eines Temperaturunterschiedes (Temperaturgradienten). Eine Möglichkeit der Wärmeübertragung ist die Wärmeleitung; weiterhin ist eine Wärmeübertragung auch im Rahmen eines konvektiven Strömungsprozesses oder aber in Form von Wärmestrahlung möglich.

Typische Wärmequellen sind beispielsweise elektronische Bauelemente, bei deren Betrieb Wärme anfällt, ferner Heizelemente jeglicher Art sowie Gefäße, in denen eine exotherme chemische Reaktion stattfindet.

Typische Wärmesenken sind Kühlerelemente (wie zum Beispiel passive Kühlkörper, Kühler-Lüfter-Kombinationen, Wasserkühler oder Peltier-Elemente) sowie jeder zu erwärmende Körper (beispielsweise abzutauende eisbedeckte Flächen wie etwa Dachrinnen und Oberflächen im Bereich des Automobilbaus oder der Luft- und Raumfahrttechnik).

Ein typisches Problem betrifft das Ableiten von Wärmeenergie, die aufgrund der elektrischen Widerstände von Komponenten einer elektronischen Schaltung als so genannte "Joulesche Wärme" anfällt. Ein effektives Abführen der Wärmeenergie ist insbesondere für Halbleiterbauelemente wie integrierte Schaltungen von Bedeutung, in denen eine Überhitzung die irreversible Zerstörung des Bauelements zur Folge haben kann; hierbei kommen als Wärmesenke häufig die oben genannten Kühlerelemente zum Einsatz, die mit dem Bauelement (Wärmequelle) thermisch leitend verbunden werden. Eine derartige thermisch leitende Verbindung wird etwa mittels einer Zwischenschicht erreicht, die zwischen der Wärmequelle und der Wärmesenke angeordnet ist und den Wärmeübergang zwischen der Wärmequelle und der Wärmesenke verbessert, so dass ein besonders großer Wärmestrom abgeleitet werden kann.

Als Zwischenschichten werden in der Regel Wärmeleitpasten eingesetzt, die auf die Oberfläche des Bauelements und des Kühlerelements aufgetragen werden. Diese Wärmeleitpasten bestehen zum großen Teil aus fluiden Matrixmaterialien, etwa aus niedermolekularen polymeren Harzen oder Wachsen. Zur Erhöhung der Wärmeleitfähigkeit werden diesen Matrixmaterialien wärmeleitende Hilfsstoffe in hinreichend großer Menge zugesetzt. Derartige Systeme sind üblicherweise hochverformbar, um sich der Oberfläche der Wärmequelle wie auch der Oberfläche der Wärmesenke anzupassen und so einen großflächigen thermischen Kontakt mit diesen zu gewährleisten. Jedoch sind Wärmeleitpasten nicht in der Lage, einwirkende mechanische Kräfte zu kompensieren, so dass außerdem eine mechanische Fixierung der Wärmesenke an der Wärmequelle erforderlich ist.

Um zusätzlich zu der Wärmeabfuhr auch eine mechanische Verbindung von Wärmequelle und Wärmesenke realisieren zu können, hat sich die Verwendung von wärmeleitenden klebenden Systemen als besonders vorteilhaft herausgestellt. Diese weisen in der Regel Mischungen von Polymeren mit Additiven auf (so genannte "Polymer-Compounds"), die insbesondere im Hinblick auf ihre wärmeleitenden Eigenschaften angepasst werden. Die Polymermischungen werden dabei üblicherweise als Fluidklebesystem oder als Haftklebesystem bereitgestellt. Mittels derartiger Polymermischungen ist es zudem besonders einfach, eine für viele Anwendungen - insbesondere solche im Elektronikbereich - zusätzlich erforderliche elektrische Isolierung zwischen der Wärmequelle und der Wärmesenke zu verwirklichen.

Fluidklebesysteme sind beispielsweise als wärmeleitende Flüssigklebstoffe oder -pasten bekannt. Bei Flüssigklebstoffen handelt es sich um Kleber, die zunächst auf den Verklebungsgrund (Haftgrund, Verklebungssubstrat) flüssig aufgetragen werden und dann *in situ* aushärten. Zur Herstellung der wärmeleitenden Flüssigklebstoffe werden herkömmliche polymere Matrixsysteme, die chemisch (etwa infolge einer Vernetzungsreaktion) oder physikalisch aushärten, mit gut wärmeleitenden Hilfsstoffen versetzt.

Bei solchen wärmeleitenden Flüssigklebstoffen ist jedoch nachteilig, dass sich diese nur ungenügend genau dosieren lassen und dass diese darüber hinaus während des Zusammenfügens von Wärmequelle und Wärmesenke ein Fließverhalten zeigen, das sich nicht hinreichend genau steuern lässt. Dies hat zur Folge, dass die resultierenden Zwischenschichten keine homogene Dicke aufweisen und dass zudem überschüssiges Material an den Kanten der Verklebung austreten kann. Des weiteren ist nachteilig, dass der Anteil der wärmeleitenden Hilfsstoffe an dem wärmeleitenden Flüssigklebstoff relativ hoch gewählt werden muss, um eine hinreichend gute Wärmeleitfähigkeit der Zwischenschicht zu realisieren, was wiederum die Verklebungsfestigkeit des Flüssigklebstoffs stark vermindert.

Haftklebesysteme sind beispielsweise als beidseitig verklebbare Haftetiketten bekannt, etwa als Klebepad oder Klebeband. Diese weisen eine flächige Anordnung aus zumindest einer Haftklebemasse auf und können dabei mit einem permanenten Träger oder aber trägerfrei ausgebildet sein.

Als polymeres Matrixsystem eines Haftklebesystems (also als dessen hochmolekulare Bestandteile) sind aus EP 0 566 093 A1, EP 0 942 059 B1 und EP 0 942 060 B1 unter anderem Haftklebemassen bekannt, die auf Estern der Acrylsäure oder Methacrylsäure basieren. Derartige Haftklebemassen zeichnen sich durch eine besonders hohe thermische Beständigkeit und Alterungsstabilität aus. Um eine hohe Verklebungsfestigkeit zu realisieren (insbesondere eine hohe Scherfestigkeit), weisen die Haftklebemassen Comonomere mit freien Säuregruppen auf, beispielsweise Acrylsäure oder Methacrylsäure.

Um aus einem solchen polymeren Matrixsystem eine wärmeleitende Mischung herzustellen, werden die Polymere des Haftklebesystems mit dem wärmeleitenden Hilfsstoff abgemischt (compoundiert) und anschließend gegebenenfalls auf das Substrat oder auf einen permanenten oder temporären Träger aufgetragen. Abmischen und Auftragen können dabei grundsätzlich in der Schmelze, in Lösung oder in Dispersion erfolgen.

Bei einem Abmischen in Lösung wird das polymere Matrixsystem vollständig oder zumindest teilweise in einem geeigneten flüssigen Medium gelöst (dem Lösemittel). Anschließend wird der Hilfsstoff unter Rühren in die so erhaltene Lösung eingebracht. Schließlich wird das Lösemittel aus der Mischung entfernt, was üblicherweise möglichst vollständig erfolgen soll, um eine Blasenbildung im Endprodukt zu vermeiden, die ansonsten beim Verdampfen des Lösemittels eintreten könnte. Ähnlich hierzu ist das Abmischen in Dispersion, bei dem das polymere Matrixsystem in dem Lösemittel als Dispersionsmittel nicht gelöst sondern lediglich suspendiert vorliegt.

Für das Abmischen in der Schmelze wird das polymere Matrixsystem zunächst bei erhöhten Temperaturen erweicht, wobei die Mischungstemperatur so gewählt wird, dass diese in der Nähe der Erweichungstemperatur von zumindest einem Teil des polymeren Matrixsystems liegt oder höher ist als diese. Unter solchen Bedingungen besitzt dieser Teil des polymeren Matrixsystems eine deutlich niedrigere Viskosität als bei Raumtemperatur, so dass ein mechanisches Vermischen mit dem hinzugesetzten Hilfsstoff auch ohne Zugabe von Lösemitteln möglich ist, etwa in einem Kneter oder einem Extruder.

Bei der Verwendung von Haftklebesystemen werden zwar definierte Zwischenschichten erhalten, die infolge ihrer Klebkraft zu dem jeweiligen Klebegrund auf diesen einwirkende mechanische Kräfte übertragen und ableiten können, ohne dabei beschädigt zu werden. Wenn jedoch eine besonders hohe Wärmeleitfähigkeit zu realisieren ist, so wird dies auch bei Haftklebesystemen dadurch erreicht, dass der Anteil der wärmeleitenden Hilfsstoffe in dem Haftklebesystem hoch gewählt wird, was wiederum eine Verminderung der Klebkraft und des inneren Zusammenhalts des Haftklebesystems zur Folge hat.

Noch problematischer ist diese Verminderung der Klebkraft allerdings, wenn das Haftklebesystem zusätzlich zu der guten Wärmeleitfähigkeit elektrisch isolierend sein soll. In diesem Fall sind die besonders gut wärmeleitenden Hilfsstoffe aus Metallen wie etwa Silber, Gold, Aluminium oder Kupfer nicht durchgängig einsetzbar, es muss vielmehr auf nichtmetallische wärmeleitende Werkstoffe ausgewichen werden. Nichtmetallische Werkstoffe weisen jedoch in der Regel eine erheblich geringere Wärmeleitfähigkeit auf als metallische Werkstoffe, so dass bei Verwendung nichtmetallischer Materialien der Hilfsstoffanteil noch größer ausfallen muss, wenn insgesamt eine Wärmeleitfähigkeit des Haftklebesystems erzielt werden soll, die mit der Wärmeleitfähigkeit metallischer Materialien vergleichbar ist.

Als nichtmetallische wärmeleitende Hilfsstoffe kommen insbesondere Aluminiumoxid (Al₂O₃) und Bornitrid (BN) zum Einsatz. Vor allem ersteres ist aufgrund der guten Verfügbarkeit und des günstigen Verhältnisses von Kosten zu erzielbarer Wärmeleitfähigkeit bevorzugt. Als typische nichtmetallische Hilfsstoffe können beispielsweise auch Siliziumdioxid (SiO₂), Titan(VI)-borid (TiB₂), Siliziumnitrid (Si₃N₄), Titandioxid (TiO₂), Magnesiumoxid (MgO), Nickel(II)-oxid (NiO). Kupfer(II)-oxid (CuO) und Eisen(III)-oxid (Fe₂O₃) eingesetzt werden. Darüber hinaus werden eine Vielzahl weiterer nichtmetallischer Werkstoffe als Wärmeleithilfsstoffe verwendet, beispielsweise ZrO₂(MgO), ZrO₂(Y₂O₃), Aluminiumtitanat (Al₂TiO₅), Aluminiumnitrid (AIN), Borcarbid (B₄C), Cordierit, reaktionsgebundenes Silizium-infiltriertes Siliziumcarbid (SiSiC), drucklos gesintertes Siliziumcarbid (SSiC), heißgepresstes Siliziumcarbid (HPSiC), heißisostatisch gepresstes Siliziumcarbid (HIPSiC), reaktionsgebundenes Siliziumnitrid (RBSN), drucklos gesintertes Siliziumnitrid (SSN, heißgepresstes Siliziumnitrid (HPSN) oder heißisostatisch gepresstes Siliziumnitrid (HIPSN)

Eine Aufgabe der vorliegenden Erfindung ist es daher, eine gut wärmeleitende und gleichzeitig elektrisch isolierende Wärmeleitungszusammensetzung zur Verfügung zu stellen, die diese zuvor beschriebenen Nachteile beseitigt und die insbesondere einen guten und belastbaren thermischen Kontakt zu der Oberfläche einer Wärmequelle und/oder einer Wärmesenke bietet

Diese Aufgabe wird überraschenderweise durch eine als Haftklebemasse ausgebildete Wärmeleitungszusammensetzung der eingangs genannten Art gelöst, bei der der wärmeleitende Hilfsstoff Partikel umfasst, die aus Primärteilchen aufgebaut sind und die eine massebezogene spezifische Oberfläche von 1,3 m²/g oder weniger aufweisen. Es wurde insbesondere bei derartigen partikulären Hilfsstoffen mit spezifischen Oberflächen von weniger als 1,3 m²/g beobachtet, dass diese eine deutlich höhere Wärmeleitfähigkeit in der Wärmeleitungszusammensetzung zur Folge haben als partikuläre Hilfsstoffe aus demselben Material, die jedoch eine größere spezifische Oberfläche aufweisen.

Diese Lösung war für den Fachmann nicht vorhersehbar, da normalerweise ein gegenteiliger Effekt zu erwarten gewesen wäre, nämlich dass die Wärmeleitfähigkeit der Zusammensetzung mit der spezifischen Oberfläche des wärmeleitenden Hilfsstoffs zunimmt, da eine größere Oberfläche eine größere Wärmeübergangsfläche zur Folge haben sollte, so dass ein verbesserter Wärmeübergang von Matrixpolymer zum Wärmeleithilfsstoff anzunehmen wäre.

Versuche hierzu haben jedoch gezeigt, dass eine derartige stark wärmeleitende Wärmeleitungszusammensetzung erst dann einen hinreichend hohen inneren Zusammenhalt besitzt, wenn die einzelnen Hilfsstoffpartikel zusätzlich als Anhäufungen einzelner Primärteilchen ausgebildet sind und somit eine unregelmäßig geformte Oberfläche aufweisen, die nicht glatt ist. Erst bei einer solchen räumlichen Struktur der Partikel sind diese strukturell in der Polymermatrix derart fest verankert, dass die entstehende Wärmeleitungszusammensetzung insgesamt eine hohe Kohäsion aufweist und diese auch bei höheren Temperaturen unter mechanischer Belastung nicht verliert.

Hierbei hat es sich insbesondere als vorteilhaft herausgestellt, wenn die Primärteilchen einen mittleren Durchmesser von mindestens 1 µm aufweisen oder sogar von mehr als 2 µm, da auf diese Weise gut wärmeleitende Wärmeleitungszusammensetzungen erhalten werden, deren Kohäsion sogar bei hohen Temperaturen, bei der die Viskosität der Polymermatrix abnimmt, noch hoch genug ist, um insgesamt einen stabilen Zusammenhalt zu gewährleisten.

Dabei können besonders hohe Wärmeleitfähigkeiten der Wärmeleitungszusammensetzung erreicht werden, wenn die Partikel des wärmeleitenden Hilfsstoffs eine noch geringere massebezogene spezifische Oberfläche von höchstens 1,0 m²/g aufweisen.

In einer vorteilhaften Ausgestaltungsform sind die Partikel des wärmeleitenden Hilfsstoffs zumindest im Wesentlichen Aluminiumoxidpartikel und/oder Bornitridpartikel. Infolge der Verwendung dieser inerten Hilfsstoffe werden chemisch hochbeständige Wärmeleitungszusammensetzungen erhalten, die zudem unter ökonomischen wie auch unter ökologischen Gesichtspunkten vorteilhaft sind, da diese Materialien leicht verfügbar und dabei nicht toxisch sind und gegenüber anderen möglichen Hilfsstoffen einen guten Kompromiss hinsichtlich hoher Wärmeleitfähigkeit bei gleichzeitig niedrigen Kosten bieten.

Für den Fall, dass der Hilfsstoff Aluminiumoxid enthält, hat es sich als besonders günstig erwiesen, wenn die Aluminiumoxidpartikel zu einem Anteil von mehr als 95 Gew.-% aus alpha-Aluminiumoxid bestehen, insbesondere zu einem Anteil von 97 Gew.-% oder mehr. Auf diese Weise ist es möglich, eine vorzeitige Vernetzung oder Vergelung von auf Acrylsäure oder Methacrylsäure oder deren Estern basierenden Polymerkomponenten innerhalb der Wärmeleitungszusammensetzung zu vermeiden, die bereits im Mischaggregat auftreten kann und einen starken Anstieg der Viskosität zur Folge hat. Bei Berücksichtigung eines hohen alpha-Aluminiumoxidanteils bleiben die entstehenden Mischungen auch weiterhin hervorragend verarbeitbar. Im Gegensatz dazu wurde für auf Estern der Acrylsäure oder Methacrylsäure basierende Polymere gefunden, dass wenn der Anteil von gamma- Aluminiumoxid oder beta- Aluminiumoxid mindestens 5 Gew.-% ansteigt, ein Vergelen oder Vernetzen des Polymers bereits während des Einarbeitens des Hilfsstoffs in die Schmelze auftritt, so dass die entstehende Wärmeleitungszusammensetzung nicht mehr geformt oder als homogene Schicht aufgetragen werden kann.

Ferner ist eine Wärmeleitungszusammensetzung besonders geeignet, wenn das Material des wärmeleitenden Hilfsstoffs eine Wärmeleitfähigkeit von mehr als 1 W/mK aufweist, insbesondere von mehr als 10 W/mK, günstigenfalls von mehr als 25 W/mK oder sogar von mehr als 100 W/mK. Auf diese Weise ist gewährleistet, dass die Wärmeleitungszusammensetzung bereits bei einem niedrigen Hilfsstoffgehalt eine hohe Wärmeübertragung ermöglicht. Daher kann der Anteil der wärmeleitenden Hilfsstoffe an der Wärmeleitungszusammensetzung gering gehalten werden, wodurch es möglich ist, hochkohäsive Wärmeteitungszusammensetzungen zu realisieren.

Dabei ist es insbesondere zweckmäßig, wenn der wärmeleitende Hilfsstoff in der Wärmeleitungszusammensetzung zu einem Anteil von mindestens 5 Vol.-% und höchstens 70 Vol.-% vorliegt, insbesondere zu mindestens 15 Vol.-% und höchstens 50 Vol.-%, jeweils bezogen auf das Volumen des wärmeleitenden Hilfsstoffs in der Wärmeleitungszusammensetzung. Auf diese Weise ist sichergestellt, dass die Wärmeleitungszusammensetzung insgesamt einen zügigen Wärmetransport von der Wärmequelle zu der Wärmesenke ermöglicht. Dies ist einerseits auf die hohe Wärmeleitfähigkeit derartiger Wärmeleitungszusammensetzungen zurückzuführen, andererseits aber auch einem unter diesen Bedingungen hinreichend hohen inneren Zusammenhalt der Polymermatrix geschuldet, der auch unter mechanischer Belastung einen verlässlichen thermischen Kontakt zu den Oberflächen der Wärmequelle und der Wärmesenke bietet.

Darüber hinaus ist es von Vorteil, wenn die Partikel einen mittleren Durchmesser aus einem Bereich von 2 µm bis 500 µm aufweisen, insbesondere aus einem Bereich von 2 µm bis 200 µm oder sogar aus einem Bereich von 40 µm bis 150 µm. Infolge dieser Ausbildung des Hilfsstoffes wird der thermische Kontakt zu der Wärmquelle und der Wärmesenke sogar noch weiter verbessert, da die Partikel einerseits hinreichend klein sind, um sich der Form der Oberfläche der Wärmquelle und der Wärmesenke exakt anzupassen, andererseits aber auch hinreichend groß, um eine hohe Wärmeleitfähigkeit zu erreichen, ohne dass der innere Zusammenhalt der Wärmeleitungszusammensetzung insgesamt beeinträchtigt wird.

Im Hinblick auf verbesserte Einsatzmöglichkeiten der Wärmeleitungszusammensetzung ist es dabei besonders nutzbringend, wenn die Wärmeleitungszusammensetzung als Haftklebemasse ausgebildet ist. Auf diese Weise ist es möglich, auf zusätzliche Befestigungsmittel zu verzichten, mittels derer ansonsten die Wärmesenke relativ zu der Wärmequelle fixiert werden müsste.

Darüber hinaus hat es sich als empfehlenswert herausgestellt, wenn das zumindest eine Polymer der Wärmeleitungszusammensetzung ein Polymer auf der Basis von Acrylsäureestern, Methacrylsäureestern und/oder Derivaten davon ist, die insbesondere säuregruppenhaltige Comonomere enthält. Hierdurch lassen sich die Eigenschaften der Wärmeleitungszusammensetzung auf besonders einfache Weise innerhalb eines großen Bereiches gezielt steuern, insbesondere etwa deren kohäsive und/oder adhäsive Eigenschaften. Dies wird durch die Möglichkeit, die Eigenschaften durch Verwendung weiterer geeigneter Comonomere zusätzlich anpassen zu können, weiterhin verbessert. Außerdem bieten derartige Polymere den Vorteil, dass diese besonders einfach in der Schmelze abgemischt und anschließend aus der Schmelze aufgetragen werden können, so dass bei Verwendung dieser Systeme die weitere Verarbeitung stark vereinfacht wird. Ferner kann es nützlich sein, wenn die Wärmeleitungszusammensetzung zusätzlich einen weiteren Hilfsstoff aus einem Phasenübergangsmaterial umfasst. Mit Hilfe derartiger Phasenübergangsmaterialien lassen sich Wärmeleitungszusammensetzungen realisieren, die vereinzelt auftretende Wärmespitzen aufnehmen können, ohne dass es dabei in der Wärmeleitungszusammensetzung sowie deren Umgebung zu einer Überhitzung kommt, wodurch ein gleichmäßiger Wärmetransport möglich wird.

Gemäß einem weiteren Aspekt der vorliegenden Erfindung wird ein wärmeleitendes Flächenelement zur Verfügung gestellt, das eine Wärmeleitungszusammensetzung mit der zuvor beschriebenen Zusammensetzung aufweist. Mit Hilfe dieses wärmeleitenden Flächenelements lässt sich eine Zwischenschicht auf besonders einfache Weise zwischen eine Wärmequelle und eine Wärmesenke einbringen, wobei die Zwischenschicht die in der Wärmequelle entstehende Wärme effizient ableitet und dabei verlässlich arbeitet. Dementsprechend bietet die vorliegende Erfindung zusätzlich die Verwendung der obigen Wärmeleitungszusammensetzung zur Herstellung eines wärmeleitenden Flächenelements, wodurch auf besonders einfache Weise ein wärmeleitendes Flächenelement realisiert werden kann, das problemlos mit den Oberflächen von Wärmequellen und Wärmesenken verbunden werden kann und dort eine stabile Verklebung bietet.

Schließlich wird die Verwendung der obigen Wärmeleitungszusammensetzung zum Wärmetransport innerhalb elektronischer Geräte vorgeschlagen, wodurch aufgrund der hohen Verlässlichkeit dieser Wärmeleitungszusammensetzung sowie dem damit erzielbaren hervorragenden thermischen Kontakt zwischen der Wärmequelle und der Wärmesenke einer Beschädigung der Komponenten des elektronischen Geräts infolge lokaler Überhitzung effizient entgegengewirkt wird.

Als Wärmeleitungszusammensetzung im Sinne der vorliegenden Erfindung wird jede beliebige geeignete Zusammensetzung aus mindestens zwei unterschiedlichen Komponenten verstanden, die eine hohe Wärmeleitfähigkeit aufweist. Die Wärmeleitfähigkeit eines Stoffes wird durch die Geschwindigkeit bestimmt, mit der sich eine lokale Erwärmung des Stoffes durch den Stoff hindurch ausbreitet, und entspricht somit dem Vermögen des Stoffes, thermische Energie mittels Wärmeleitung in Form von Wärme zu transportieren. Die Wärmeleitfähigkeit wird üblicherweise als temperaturabhängige Materialkonstante quantifiziert, nämlich als (spezifische) Wärmeleitfähigkeit oder Wärmeleitzahl, der das Formelzeichen λ (Lambda), l, k oder K (Kappa) und die Einheit W/(K·m) zugeordnet ist. Als hohe Wärmeleitfähigkeit wird insbesondere eine Wärmeleitfähigkeit angesehen, die höher ist als die Wärmeleitfähigkeit der in der Energietechnik häufig als Wärmeträger (Wärmetransportmittel) eingesetzten Wasser/Ethylenglykol-Gemische (60/40), die also bei 25 °C größer ist als 0,44 W/mK.

Darüber hinaus impliziert der Begriff "Wärmeleitungszusammensetzung", dass diese Zusammensetzung während einer Anwendung als Wärmeleitungszusammensetzung zeitlich konstante Eigenschaften aufweist und daher unter den konkreten Anwendungsbedingungen inert ist (insbesondere in dem Temperaturbereich der Anwendung), so dass in der Zusammensetzung keine unbeabsichtigten chemischen Zersetzungsprozesse in nennenswerten Umfang ablaufen. Dies schließt jedoch nicht aus, dass in einer Wärmeleitungszusammensetzung ein allmählicher Langzeitabbau der Zusammensetzung infolge üblichen Gebrauchs auftreten kann, wie er etwa auch bei den bekannten fluiden Wärmetransportsystemen eintritt. Darüber hinaus kann in einer erfindungsgemäßen Wärmeleitungszusammensetzung auch eine gezielte chemische Veränderung, etwa ein zur Kohäsionssteigerung durchgeführtes Nachvernetzen nach dem Auftragen der Wärmeleitungszusammensetzung auf die Oberfläche der Wärmequelle oder Wärmesenke, oder ein beabsichtigter Phasenübergang innerhalb der Wärmeleitungszusammensetzung zum Erzielen einer latenten Wärmespeicherung auftreten.

Erfindungsgemäß umfasst die Wärmeleitungszusammensetzung zumindest ein Polymer und zumindest einen wärmeleitenden Hilfsstoff. Als Polymer sind ausnahmslos alle geeigneten und dem Fachmann bekannten Polymere einsetzbar, die in dem jeweiligen Anwendungsbereich chemisch beständig und in der Anwendung formstabil oder zumindest im Wesentlichen formwahrend sind. Dazu gehören sowohl niedermolekulare Wachse und Harze als auch hochmolekulare Polymermassen und technische Polymere. Unter diesen seien beispielsweise Polymere auf der Basis von Naturkautschuken, Synthesekautschuken und/oder Silikonen genannt, insbesondere Polymere auf der Basis von Acrylaten und/oder Methacrylaten.

"Auf der Basis von" oder "auf der Grundlage von" bedeutet vorliegend, dass die Eigenschaften der Polymermischung zumindest stark von den grundlegenden Eigenschaften dieses Polymers (dem so genannten "Basispolymer") bestimmt werden, wobei selbstverständlich nicht ausgeschlossen ist, dass diese durch Verwendung von modifizierenden Hilfs- oder Zusatzstoffen oder von weiteren Polymeren in der Zusammensetzung zusätzlich beeinflusst werden. Insbesondere kann dies bedeuten, dass der Anteil des Basispolymers an der Gesamtmasse der polymeren Phase mehr als 50 Gew.-% beträgt.

Im Sinne dieser Erfindung lassen sich etwa Polymere auf der Basis von Acrylsäure und/oder Methacrylsäure einsetzen, beispielsweise solche auf der Basis von Acrylsäureestern, Methacrylsäureestern und/oder Derivaten davon, da diese besonders alterungsstabil sind und somit wiederholten Wärmetransportprozessen langzeitig standzuhalten vermögen. Insbesondere haben sich dabei Polymere als vorteilhaft herausgestellt, die zusätzlich Comonomere mit Säuregruppen aufweisen.

Es sind insbesondere auf Acrylaten basierende Polymere geeignet, die etwa durch radikalische Polymerisation erhältlich sind und die zumindest teilweise auf mindestens einem Acrylmonomer der allgemeinen Formel CH₂=C(R¹)(COOR²) basieren, wobei R¹ H oder ein CH₃-Rest ist und R² aus der Gruppe der gesättigten, unverzweigten oder verzweigten, substituierten oder unsubstituierten C₁- bis C₃₀-Alkylreste gewählt ist (vorteilhafterweise der C₂- bis C₂₀-Alkylreste, der C₄- bis C₁₄-Alkylreste oder sogar der C₄-bis C₉-Alkylreste), gegebenenfalls aber auch H darstellen kann.

Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigte Isomere, beispielsweise Isobutylacrylat, 2-Ethylhexylacrylat, 2-Ethylhexylmethacrylat, Isocctylacrylat, Isooctylmethacrylat, Cyclohexylmethacrylat, Isobornylacrylat, Isobornylmethacrylat und 3,5-Dimethyladamantylacrylat.

Diese Polymere können zusätzlich zu dem mindestens einen Typ Acrylmonomer weitere Comonomere enthalten, die vorteilhafterweise mit dem mindestens einen Acrylmonomer polymerisierbar sind, etwa Vinylverbindungen mit funktionellen Gruppen, Maleinsäureanhydrid, Styrol, Styrol-Verbindungen, Vinylacetat, Acrylamide, mit Doppelbindung funktionalisierte Photoinitiatoren und dergleichen.

Erfindungsgemäß dient das zumindest eine Polymer als Matrix für den wärmeleitenden Hilfsstoff. Als Hilfsstoff (Zusatzstoff, Additiv) wird grundsätzlich jede Substanz verstanden, die den Polymerbestandteilen (polymere Phase, Polymermatrix) der Wärmeleitungszusammensetzung hinzugefügt wird, um die Eigenschaften und Funktionalität der Wärmeleitungszusammensetzung gezielt zu beeinflussen.

Als wärmeleitender Hilfsstoff im Sinne der Erfindung gilt jeder Hilfsstoff, der selber eine hohe Wärmeleitfähigkeit aufweist und, in die Polymermatrix eingebracht, die Wärmeleitfähigkeit der Wärmeleitungszusammensetzung insgesamt vergrößert. Insbesondere ist es dabei von Vorteil, wenn das Material des wärmeleitenden Hilfsstoffs eine Wärmeleitfähigkeit von mehr als 1 W/mK aufweist, insbesondere von mehr als 10 W/mK oder sogar von mehr als 25 W/mK. Der Volumenanteil des wärmeleitenden Hilfsstoffs in der Wärmeleitungszusammensetzung kann dabei vorteilhafterweise mindestens 5 Vol.-% und höchstens 70 Vol.-% betragen, insbesondere mindestens 15 Vol.-% und höchstens 50 Vol.-%. Da der wärmeleitende Hilfsstoff porös ausgebildet sein kann, wird als Volumenanteil des wärmeleitenden Hilfsstoffs der Volumenzuwachs der Wärmeleitungszusammensetzung verstanden, der bei Zugabe des wärmeleitenden Hilfsstoffs zu der Wärmeleitungszusammensetzung auftritt, bezogen auf das jeweilige Endvolumen der Wärmeleitungszusammensetzung nach der Zugabe (der Volumenanteil ist also auf das Volumen des wärmeleitenden Hilfsstoffs so, wie dieser in der Wärmeleitungszusammensetzung vorliegt, bezogen). Der Volumenanteil lässt sich unter Berücksichtigung der kompakten Dichte des wärmeleitenden Hilfsstoffs (also nicht dessen Schüttdichte) und der Dichte des Polymers in die entsprechenden Massenanteile der Formulierung umrechnen.

Als wärmeleitende Hilfsstoffe sind grundsätzlich alle geeigneten Materialien einsetzbar, die mit dem Polymer vermischbar sind. Insbesondere gelangen erfindungsgemäß keramische Werkstoffe zum Einsatz, also aus anorganischen und überwiegend nichtmetallischen Verbindungen und/oder Elementen aufgebaute Materialien, die zu mehr als 30 Vol.% kristallin vorliegen, beispielsweise Silikate, Oxide, Karbide, Nitride, Silizide, Boride und dergleichen.

Als wärmeleitender Hilfsstoff können etwa Aluminiumoxid (Al₂O₃), Bornitrid (BN), Siliziumdioxid (SiO₂), Titan(VI)-borid (TiB₂), Siliziumnitrid (Si₃N₄), Titandioxid (TiO₂), Magnesiumoxid (MgO), Nickel(II)-oxid (NiO), Kupfer(II)-oxid (CuO) und Eisen(III)-oxid (Fe₂O₃) sowie andere nichtmetallische Werkstoffe eingesetzt werden, beispielsweise ZrO₂ (MgO), ZrO₂ (Y₂O₃), Aluminiumtitanat (Al₂TiO₅), Aluminiumnitrid (AIN), Borcarbid (B₄C), Cordierit, reaktionsgebundenes Silizium-infiltriertes Siliziumcarbid (SiSiC), drucklos gesintertes Siliziumcarbid (SSiC), heißgepresstes Siliziumcarbid (HPSiC), heißisostatisch gepresstes Siliziumcarbid (HIPSiC), reaktionsgebundenes Siliziumnitrid (RBSN), drucklos gesintertes Siliziumnitrid (SSN, heißgepresstes Siliziumnitrid (HPSN) oder heißisostatisch gepresstes Siliziumnitrid (HIPSN).

Entsprechend der vorliegenden Erfindung liegt der wärmeleitende Hilfsstoff in Form von Partikeln vor. Als Partikel wird vorliegend jede Materialansammlung verstanden, die aus einzelnen voneinander abgegrenzten Volumenkörpern besteht, deren äußere Abmessungen sehr klein sind, also beispielsweise Pulver, Stäube einschließlich Feinstäube, Kolloide einschließlich Sole, Aerosole und dergleichen. Für die Definition eines Partikels kommt es dabei grundsätzlich nicht darauf an, dass dieses einen bestimmten inneren Aufbau, eine bestimmte Kristallinität, einen bestimmten Formfaktor oder eine besondere - regelmäßige oder unregelmäßige - äußere Form aufweist.

Unter den partikulären wärmeleitenden Hilfsstoffen haben sich solche als besonders günstig herausgestellt, die zumindest teilweise aus Aluminiumoxidpartikeln und/oder Bornitridpartikeln bestehen, also aus Partikeln aus einem beliebigen Aluminiumoxid oder einem beliebigen Bornitrid.

Für die Aluminiumoxidpartikel ist es im Hinblick auf eine bessere Verarbeitbarkeit insbesondere bei Verwendung von Acrylat-basierenden Polymeren sinnvoll, wenn diese zu einem Anteil von mehr als 95 Gew.-% oder sogar von mindestens 97 Gew.-% aus alpha-Aluminiumoxid bestehen (rhomboedrisches oder trigonales Aluminiumoxid; etwa in Form von Korund) und nur einen sehr geringen Anteil anderer Modifikationen aufweise, etwa kubisches gamma-Aluminiumoxid oder auch das lediglich so genannte "beta-Aluminiumoxid" (Na₂O * 11 Al₂O₃).

Im Hinblick auf eine Eingrenzung der äußeren Abmessungen dieser Partikel ist es sinnvoll, wenn lediglich solche Partikel zum Einsatz kommen, die einen mittleren Durchmesser aus einem Bereich von 2 µm bis 500 µm aufweisen, insbesondere aus einem Bereich von 2 µm bis 200 µm oder sogar aus einem Bereich von 40 µm bis 150 µm. Als mittlerer Durchmesser wird ein über eine Partikelgrößenverteilung als Massenmittel oder Zahlenmittel gemittelter Partikeldurchmesser verstanden, wobei dieser Partikeldurchmesser im Falle von lediglich einer einzigen Partikelgröße (d.h. einer monodispersen Substanz) auch mit der einen einzigen Partikelgröße identisch sein kann. Anstelle dessen kann der mittlere Partikeldurchmesser auch als D50-Wert bestimmt werden, also als derjenige Partikeldurchmesser, oberhalb und unterhalb dessen jeweils 50 Gew.-% der Partikel innerhalb der Größenverteilung vorliegen. Als Partikeldurchmesser wird hier der über ein Partikel gemittelte mittlere Durchmesser verwendet, der bei unregelmäßig geformten Partikeln zwischen dem maximalen Durchmesser und dem minimalen Durchmesser der Partikel liegt.

Partikelgrößen sowie deren Verteilungen lassen sich unter Verwendung aller üblichen Verfahren ermitteln, etwa mit Hilfe einer Bildanalyse mikroskopischer Abbildungen (beispielsweise Abbildungen, die aus der optischen Mikroskopie einschließlich Ultramikroskopie, aus der Elektronenmikroskopie oder der Rasterkraftmikroskopie erhalten werden), aus der Beugung oder Streuung elektromagnetischer Strahlung (etwa Laserbeugung bzw. -streuung oder Röntgenbeugung/-streuung, einschließlich Kleinwinkelstreuung), aus Sedimentationsmessungen, etwa mittels einer Ultrazentrifuge und dergleichen.

Zur Realisierung der vorliegenden Erfindung ist es hierbei erforderlich, dass die Partikel eine massebezogene spezifische Oberfläche von 1,3 m²/g oder weniger aufweisen, vorzugsweise sogar von weniger als 1,0 m²/g. Als spezifische Oberfläche der Partikel wird die Gesamtheit aller in dem Probenvolumen enthaltenen Oberflächen bezeichnet, wozu nicht bloß die äußere Begrenzung der Partikel (äußere Oberfläche oder geometrische Oberfläche, die also von außen sichtbar ist), sondern ebenfalls die Oberfläche innerhalb der Partikel zählt, also etwa die Begrenzungsfläche innerhalb von inneren Hohlräumen, Kanälen, Poren und dergleichen. Vorliegend handelt es sich um die massebezogene spezifische Oberfläche der Partikel, also um die Oberfläche, die in einer Probenmenge einer Masse von 1 g vorliegt. Üblicherweise werden derartige spezifische Oberflächen mittels des Sorptionsverfahrens (BET-Bestimmung) bestimmt, in denen die Adsorption und Desorption eines Sondengases (in der Regel von Stickstoff, Helium oder Quecksilber) an der zugänglichen Oberfläche der Probe untersucht wird. So wurde bei Verwendung von Bornitrid eine akzeptable Wärmeleitfähigkeit bereits für eine spezifische Oberfläche von 5 m²/g beobachtet, wobei eine weitere Verringerung der spezifischen Oberfläche auf Werte unterhalb von 1,3 m²/g einen zusätzlichen drastischen Anstieg der Wärmeleitfähigkeit zur Folge hat.

Darüber hinaus ist es im Sinne der Erfindung erforderlich, dass die wärmeleitenden Partikel ihrerseits aus Primärteilchen aufgebaut sind. Ein Primärteilchen ist ein Teilchen sehr kleinen Durchmessers, das beispielsweise nahezu durchgängig kristallin (Kristallit) oder amorph ist, aus dem wiederum größere Strukturen aufgebaut sind, im vorliegenden Fall die Partikel. Die Partikel können dabei amorph oder polykristallin sein (etwa, wenn die Primärteilchen als einzelne Kristalldomänen eine unterschiedliche räumliche Ausrichtung aufweisen) oder aber eine übergeordnete Kristallstruktur besitzen, solange die Partikel insgesamt nicht kompakt ausgebildet sind.

Die aus Primärteilchen aufgebauten Partikel liegen als beliebige räumliche Häufung von vielen dicht aneinander gedrängten und äußerlich verbundenen kleineren Individuen vor, beispielsweise als nicht verwachsener Verband von an Ecken und Kanten aneinander gelagerten Primärteilchen, deren Gesamtoberfläche nahezu identisch mit der Summe der Einzeloberflächen ist, oder als verwachsener Verband von flächig über Seitenflächenbereiche aneinander gelagerten Primärteilchen, deren Oberfläche kleiner ist als die Summe der Oberflächen der Primärteilchen, also etwa als Agglomerate, Aggregate, Assoziate, Koazervate, Flokkulate, Konglomerate und dergleichen.

Erfindungsgemäß können diese Primärteilchen mittlere Durchmesser von mindestens 1 µm aufweisen, insbesondere von mindestens 2 µm. Entsprechend dem Partikeldurchmesser wird als mittlerer Durchmesser ein über eine Primärteilchengrößenverteilung als Massenmittel oder Zahlenmittel gemittelter Primärteilchendurchmesser verstanden. Der Primärteilchendurchmesser ist der über einzelne Primärteilchen gemittelte mittlere Durchmesser, der etwa bei unregelmäßig geformten Primärteilchen zwischen dem maximalen Durchmesser und dem minimalen Durchmesser der Primärteilchen liegt.

Infolge des Aufbaus der Partikel aus Primärteilchen ist die äußere Oberfläche der Partikel also nicht glatt, sondern vielmehr unregelmäßig und weist dabei eine Vielzahl an einzelnen Erhebungen und Vertiefungen auf. Soll die räumliche Struktur dieser Teilchen im Rahmen der fraktalen Geometrie beschrieben werden, so könnte dies etwa durch Verwendung einer fraktalen Dimension geschehen, die auf jeden Fall größer als zwei und zudem kleiner als drei ist. Derartige aufgefaltete räumliche Strukturen sind bei einem Partikel mit regelmäßig-geometrischer (nicht-fraktaler) Oberfläche nicht vorhanden, also etwa bei einem Tetraeder, einem Kegel, einer Kugel, einem Rotationsellipsoid, einem Quader oder einem Prisma.

Darüber hinaus ist durch Primärteilchen der zuvor beschriebenen Größe gewährleistet, dass die Hohlraumstrukturen (Poren) zwischen den Primärteilchen, die sich beim Aneinanderlagern der Primärteilchen ausbilden, groß genug sind, damit die Polymermatrix zumindest teilweise in die Partikel eindringen kann, indem sie einen Teil des Raumes zwischen zwei benachbarten Primärpartikeln ausfüllt. Eine vollständige Bedeckung der im Innern der Partikel vorhandenen Oberfläche ist jedoch auch unter diesen Umständen nicht zu erwarten, da insbesondere bei kleinen Porendurchmessern der Kapillardruck innerhalb dieser Poren sehr groß sein kann, so dass innerhalb der Partikel auch nicht von der Polymermasse bedeckte und somit freiliegende Abschnitte der Partikeloberfläche vorliegen können.

Infolge des zuvor beschriebenen Aufbaus erhält die Wärmeleitungszusammensetzung nicht bloß eine hohe mechanische Belastbarkeit, sondern es wird zugleich eine hohe Wärmeleitfähigkeit sichergestellt.

Für die zuvor beschriebenen Materialien lassen sich erfindungsgemäß einsetzbare Partikel in unterschiedlichen Verfahren erhalten, etwa in nasschemischen Fällungsreaktionen, als kalziniertes oder pyrogenes Metalloxid oder Aerosil sowie durch mechanische Zerkleinerung makroskopischen Materials, das aus Primärteilchen aufgebaut ist, etwa in einer Kugelmühle.

Die Wärmeleitungszusammensetzung kann ferner durch die spezifische Wahl ihrer Komponenten angepasst sein, um ein klebendes Verhalten entsprechend einer Haftklebemasse aufzuweisen. Dies lässt sich beispielsweise durch Verwendung klebefähiger Polymere erreichen, die gleichzeitig eine mechanische Kraftübertragung zwischen den beiden Verklebungssubstraten (Wärmequelle und Wärmesenke) bewirken. Als Haftklebemassen werden solche Klebemassen bezeichnet, die bei Raumtemperatur bereits unter relativ schwachem Andruck eine dauerhafte Verklebung mit dem Substrat erlauben. Im Gegensatz dazu werden als Schmelzklebemassen (oder Heißschmelzklebemassen) solche Klebemassen bezeichnet, die erst bei erhöhten Temperaturen eine dauerhafte Verklebung mit dem Substrat eingehen, wobei die so erhaltene Verklebung auch bei einem anschließenden Abkühlen auf Raumtemperatur noch erhalten bleibt. Die Verklebbarkeit von Haftklebemassen wie auch die Verklebbarkeit von Schmelzklebemassen beruht unter anderem auf den adhäsiven Eigenschaften der jeweiligen Klebemassen.

Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche und ist als Anfassklebrigkeit (dem so genannten "Tack") oder als Klebkraft bestimmbar. Um die Adhäsion einer Klebemasse gezielt zu beeinflussen, werden der Klebemasse häufig Weichmacher und/oder klebkraftsteigernde Harze (so genannte "Tackifier") zugesetzt.

Als Kohäsion bezeichnet man üblicherweise den physikalischen Effekt, der den inneren Zusammenhalt eines Stoffs oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse in einer Nachbehandlung aktinischer (energiereicher) Strahlung ausgesetzt wird, beispielsweise ultraviolettem Licht oder Elektronenstrahlen.

Die klebtechnischen Eigenschaften einer Haftklebemasse werden in erster Linie von dem Verhältnis adhäsiver und kohäsiver Eigenschaften bestimmt. So ist es beispielsweise für einige Anwendungen wichtig, dass die eingesetzten Klebemassen hochkohäsiv sind, also über einen besonders starken inneren Zusammenhalt verfügen, während für andere Anwendungen eine besonders hohe Adhäsion erforderlich ist. Haftklebemassen wie Heißschmelzklebemassen können zusätzlich mit chemischen oder physikalischen Härtungs- bzw. Vernetzungsmechanismen ausgestattet sein.

Bei Flüssigklebstoffen (beispielsweise lösemittelhaltigen Nassklebstoffen oder Dispersionsklebstoffen auf Wasserbasis) wird eine niederviskose Lösung oder Dispersion der Polymerphase auf die Verklebungssubstrate aufgetragen. Im Verlauf des Entweichens des Lösemittels (organische Lösemittel oder Wasser) steigt die Viskosität der Lösung bzw. Dispersion an, so dass die Verklebungssubstrate durch den dabei entstehenden Polymerfilm miteinander verbunden werden. Als Flüssigklebstoffe seien etwa einkomponentige oder mehrkomponentige, chemisch oder physikalisch abbindende Kleber genannt.

Eine Wärmeleitungszusammensetzung kann darüber hinaus selbstverständlich auch weitere Rezeptierungsbestandteile und/oder Zuschlagsstoffe umfassen wie zum Beispiel Hilfsstoffe, Pigmente, rheologische Additive, Additive zur Verbesserung der Haftung, Weichmacher (Plastifizierungsmittel), Harze, Elastomere, Alterungsschutzmittel (Antioxidantien), Lichtschutzmittel, UV-Absorber sowie sonstige Hilfs- und Zusatzstoffe, beispielsweise Trockenmittel (etwa Molekularsieb-Zeolithe oder Calciumoxid), Fließ- und Verlaufmittel, Benetzer wie Tenside oder Katalysatoren, wärmeleitende Füllstoffe sowie wärmespeichernde Füllstoffe.

Als Hilfsstoffe können alle fein gemahlenen festen Zusatzstoffe eingesetzt werden, zum Beispiel Kreide, Magnesiumcarbonat, Zinkcarbonat, Kaolin, Bariumsulfat, Titandioxid oder Calciumoxid. Weitere Beispiele sind Talkum, Glimmer, Kieselsäure, Silikate oder Zinkoxid. Natürlich können auch Mischungen der genannten Stoffe verwendet werden.

Die eingesetzten Pigmente können organischer oder anorganischer Natur sein. Es kommen alle Arten organischer oder anorganischer Farbpigmente in Frage, beispielsweise Weißpigmente wie Titandioxid (zur Verbesserung der Licht- und UV-Stabilität) oder Metallpigmente. Bei einer Verwendung von Metallpigmenten oder anderen metallischen Hilfsstoffen oder Trägermaterialien ist allerdings darauf zu achten, dass diese metallischen Bestandteile bei einem Einsatz in einem insgesamt elektrisch isolierenden wärmeleitenden Flächenelement mit hoher elektrischer Durchschlagfestigkeit nicht durchgängig über die gesamte Dicke des Flächenelements vorgesehen sein dürfen, vielmehr muss das Flächenelement zumindest in einem schichtförmigen Teilbereich elektrisch vollständig isolierend ausgebildet sein.

Beispiele für rheologische Additive sind pyrogene Kieselsäuren, Schichtsilikate (beispielsweise Bentonite), hochmolekulare Polyamidpulver oder Pulver auf der Basis von Rhizinusölderivaten.

Additive zur Verbesserung der Haftung können zum Beispiel Stoffe aus den Gruppen der Polyamide, Epoxide oder Silane sein. Die hierbei erzielbare Verbesserung der Haftung betrifft sowohl die Haftung der Haftklebemasse an einem Verklebungssubstrat oder Träger wie auch die innere Haftung der Polymermatrix an den Partikeln des wärmeleitenden Hilfsstoffs.

Beispiele für Weichmacher zur Verbesserung der Klebfähigkeit sind Phthalsäureester, Trimellitsäureester, Phosphorsäureester, Adipinsäureester sowie Ester anderer acyclischer Dicarbonsäuren, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitrilkautschuke oder Polyisoprenkautschuke), flüssige oder halbfeste Polymerisate aus Buten und/oder Isobuten, Acrylsäureester, Polyvinylether, Flüssig- und Weichharze auf der Basis der Rohstoffe, die auch die Basis für klebrigmachende Harze darstellen, Wollwachs und andere Wachse, Silikone sowie Polymerweichmacher wie etwa Polyester oder Polyurethane.

Die Rezeptierung der Wärmeleitungszusammensetzung mit den weiteren Bestandteilen wie zum Beispiel Hilfsstoffen und Weichmachern, ist ebenfalls Stand der Technik.

Zur Optimierung der klebtechnischen Eigenschaften können den erfindungsgemäßen Wärmeleitungszusammensetzungen Harze beigemischt werden. Als zuzusetzende klebrigmachende Harze (die Klebkraft steigernde Harze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C₅- bis C₉- sowie andere Kohlenwasserstoffharze. Beliebige Kombinationen dieser und weiterer Harze können eingesetzt werden, um die Eigenschaften der resultierenden Wärmeleitungszusammensetzung wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf der Basis reiner Monomere, hydrierte Kohlenwasserstoffharze, funktionelle Kohlenwasserstoffharze sowie Naturharze.

Eine weitere vorteilhafte Ausgestaltung des Flächenelements kann durch Zugabe von einem wärmespeichernden Füllstoff zu zumindest einer der Schichten erreicht werden. Als wärmespeichernder Füllstoff wird vorliegend jeder Füllstoff mit einer hohen Wärmekapazität verstanden, insbesondere mit einer Wärmekapazität von mehr als 0,7 J/gK. Infolge dieser thermischen Pufferwirkung solcher Substanzen kann so ein gleichmäßiger Wärmetransport erzielt werden. Füllstoffe mit hoher Wärmekapazität, die in vorteilhafter Weise eingesetzt werden können, sind etwa Aluminium, Bor, Calcium, Eisen, Graphit, Kupfer, Magnesium oder Verbindungen der vorgenannten Stoffe, insbesondere Aluminiumchlorid, Calciumcarbonat, Calciumchlorid, Kupfersulfat, Magnetit, Haematit, Magnesiumcarbonat und Magnesiumchlorid.

Bevorzugt wird als wärmespeichernder Füllstoff ein Phasenübergangsmaterial eingesetzt (so genanntes "Phase Change Material"). Mit Hilfe dieser Materialien ist es möglich, kurzfristige Spitzen im Wärmestrom abzupuffern. Als derartige Latentwärmespeicher können alle dem Fachmann bekannten Phasenübergangsmaterialien eingesetzt werden, beispielsweise niedrigschmelzende Salze oder Paraffinwachse.

Die erfindungsgemäßen Wärmeleitungszusammensetzungen lassen sich hervorragend zur Herstellung eines wärmeleitenden Flächerelements einsetzen. Als Flächenelement im Sinne dieser Anmeldung gelten insbesondere alle üblichen und geeigneten Gebilde mit im Wesentlichen flächenförmiger Ausdehnung. Diese können verschieden ausgestaltet sein, insbesondere flexibel, als Folie, Band, Etikett, oder als Formstanzling.

Die so erhaltenen Flächenelemente können beliebig beschaffen sein, also etwa einen permanenten Träger aufweisen oder auch trägerfrei ausgebildet sein. Als besonders vorteilhaft hat es sich herausgestellt, wenn das Flächenelement klebefähig eingerichtet ist, also etwa, indem als Wärmeleitungszusammensetzung ein klebendes Polymer-Compound eingesetzt wird. Wird beispielsweise eine Wärmeleitungszusammensetzung mit haftklebenden Eigenschaften verwendet, so wird das Dosieren der Wärmeleitungszusammensetzung und das Verbinden einer Wärmequelle mit einer Wärmesenke insgesamt besonders einfach.

Zur Herstellung der erfindungsgemäßen Wärmeleitungszusammensetzung sind ohne Ausnahme alle bekannten und geeigneten Verfahren einsetzbar. So lässt sich beispielsweise das zumindest eine Polymer mit dem Füllstoff oder den Füllstoffen in einem üblichen Mischaggregat als Feststoff oder in der Schmelze vermischen, etwa in einem Kneter oder Doppelschneckenextruder.

Auch zur Herstellung der erfindungsgemäßen Flächenelemente sind ohne Ausnahme alle bekannten und geeigneten Verfahren einsetzbar. So lassen sich flächenförmige Anordnungen der Wärmeleitungszusammensetzungen des erfindungsgemäßen Flächenelements mit den geläufigen Verfahren zur Herstellung polymerer Flächenelemente nach dem Stand der Technik herstellen. Dazu zählen etwa die Flachfolienextrusion, die Blasfolienextrusion, das Kalanderverfahren, die Beschichtung aus der Schmelze, aus einer Lösung, aus einer Dispersion oder aus einer monomeren oder präpolymeren Vorstufe des Polymeren.

Zur Herstellung der Flächenelemente kann zum Beispiel die Wärmeleitungszusammensetzung zunächst schichtförmig ausgebreitet werden, etwa auf einem permanenten Träger oder auf einem temporären Fertigungsträger (einem so genannten "Prozessliner"), der während des Verfahrens oder spätestens am Ende des Verfahrens von dem Flächenelement wieder getrennt wird. Wird ein permanenter Träger eingesetzt, so ist es vorteilhaft, wenn auch dieser eine hohe Wärmeleitfähigkeit besitzt, etwa, indem dieser ebenfalls wärmeleitende Füllstoffe enthält. Alternativ oder zusätzlich kann das Flächenelement als wärmeleitenden Träger, mittels dessen ein schneller Wärmetransport über die gesamte Fläche des Flächenelements realisiert wird, auch ein flächenförmiges metallisches Gebilde enthalten, beispielsweise eine Folie, ein Gitter, ein Vlies, ein Gewebe oder ein Streckmetall. Derartige Flächenelemente werden erfindungsgemäß zum Verbinden von Wärmequellen und Wärmesenken eingesetzt, insbesondere innerhalb von elektronischen Geräten.

Weitere Vorteile und Anwendungsmöglichkeiten gehen aus den Ausführungsbeispielen hervor, die anhand der beigefügten Messwertdiagramme im Folgenden näher beschrieben werden sollen. Dabei zeigt
Fig. 1 ein Diagramm, in dem die Wärmeleitfähigkeit von Wärmeleitungszusammensetzungen in Abhängigkeit von der spezifischen Oberfläche der darin als wärmeleitenden Hilfsstoff eingesetzten Aluminiumoxidpartikel dargestellt ist, und
Fig. 2 ein Diagramm, in dem für die in Fig. 1 dargestellten Proben die Wärmeleitfähigkeit der Wärmeleitungszusammensetzung in Abhängigkeit von der mittleren Partikelgröße der Aluminiumoxidpartikel aufgetragen ist.

Die Eigenschaften der exemplarisch hergestellten Wärmeleitungszusammensetzungen wurden nach den folgenden Verfahren untersucht:

Zur Bestimmung der spezifischen Oberfläche unterschiedlicher wärmeleitender Hilfsstoffe wurde eine Variante des BET-Verfahrens durchgeführt, innerhalb dessen die Adsorption von Stickstoff an einer beliebigen Probe nach DIN 66132 (Einpunkt-Differenzverfahren nach Haul und Dümbgen), an keramischen Pulvern nach ISO 18757:2003 (deutsche Fassung: EN ISO 18757:2005) und/oder an Aluminiumoxid nach ISO 8008 bestimmt wurde.

Zur Ermittlung der mittleren Partikelgröße der wärmeleitenden Hilfsstoffe wurde eine statische Laserlichtbeugung an mit Hilfe von Ultraschall in Wasser dispergierten Proben durchgeführt (Gerät: Malvern Instruments Mastersizer 2000), wobei die Auswertung nach dem Fraunhofer-Modell erfolgte.

Zur Bestimmung der Wärmeleitfähigkeit der Wärmeleitungszusammensetzungen mit den wärmeleitenden Hilfsstoffen wurde ein Verfahren nach ISO-Entwurf 22007-2 durchgeführt (Dicke der Prüfkörper: 10 mm auf beiden Seiten des flächigen Heizelements).

Die Bestimmung der elektrischen Durchschlagfestigkeit der mit den Wärmeleitungszusammensetzungen erhaltenen haftklebenden Flächenelementen erfolgte nach VDE 0100.

Die Bestimmung der Klebkraft haftklebriger Flächenelemente mit Wärmeleitungszusammensetzungen von 200 µm Massendicke erfolgte in einem Schälversuch unter einem Winkel von 90 ° bei einer Abzugsgeschwindigkeit von 300 mm/min nach PSTC 1 (entsprechend ASTM D 3330-04 / ISO 29862:2007). Alle Messungen wurden bei Raumtemperatur (23 °C) unter klimatisierten Bedingungen (bei 50 % relativer Luftfeuchtigkeit) durchgeführt. Der Schälversuch wurde exemplarisch mit einer einzigen Probe durchgeführt, wobei die Bestimmung der Klebkraft nach einer Verklebungszeit/Alterungsdauer von zwei Wochen erfolgte.

Die Wärmeleitungszusammensetzungen wurden aus einer Acrylat-Polymermasse und wärmeleitenden Hilfsstoffen hergestellt. Als Haftklebemasse wurde eine Haftklebemasse mit einer Acrylat-Polymermasse verwendet, die als Comonomere 45 Gew.% Ethylhexylacrylat, 45 Gew.-% Butylacrylat, 8 Gew.-% Methylacrylat, 1 Gew.-% Hydroxyethylmethacrylat sowie 1 Gew.-% Acrylsäure enthielt.

Als wärmeleitende Hilfsstoffe wurden unterschiedliche Aluminiumoxid-Pulver von verschiedenen Herstellern eingesetzt, um zu gewährleisten, dass die Messergebnisse von dem jeweiligen Herstellungsverfahren der Partikel unabhängig sind.

Zur Herstellung der Acrylat-Polymermasse wurden die einzelnen Comonomere in dem Fachmann bekannter Weise in einem Gemisch aus Benzin und Aceton polymerisiert. Das Lösemittel wurde anschließend mittels eines Entgasungsextruders aus der entstandenen Acrylat-Polymermasse entfernt.

Zur Herstellung einer Wärmeleitungszusammensetzung wurde die zuvor erhaltene Acrylat-Polymermasse aufgeschmolzen und der jeweilige wärmeleitende Hilfsstoff in einem Laborkneter der Firma Haake bei einer Temperatur von 100 °C in die Schmelze eingearbeitet. Das Volumen des wärmeleitenden Hilfsstoffs wurde jeweils so gewählt, dass 40 Vol.-% der abgemischten Wärmeleitungszusammensetzung dem wärmeleitenden Hilfsstoff zuzurechnen waren.

Zur Herstellung der wärmeleitenden haftklebrigen Flächenelemente wurde die zuvor erhaltene Wärmeleitungszusammensetzung in einer Vakuumpresse bei einer Temperatur von 150 °C zu Filmen einer Dicke von 200 µm verpresst. Um die für die Messung der Wärmeleitfähigkeit erforderliche Probendicke von 10 mm zu realisieren wurden 50 dieser trägerfreien Flächenelemente übereinander laminiert.

Zur Verdeutlichung des durch Einsatz der erfinderischen Wärmeleitungszusammensetzung erzielbaren Effekts ist lediglich beispielhaft eine Versuchsreihe für Wärmeleitungszusammensetzungen mit Aluminiumoxidpartikeln als wärmeleitendem Hilfsstoff wiedergegeben, die sich nur im Hinblick auf die konkrete Struktur und Morphologie der Aluminiumoxidpartikel unterscheiden. Es sei darauf hingewiesen, dass ähnliche Ergebnisse auch bei Verwendung anderer Hilfsstoffsysteme sowie bei anderen Polymeren erhalten wurden.

**TABELLE 1**

| Probe Nr. | α-Gehalt [Gew.-%] | BET [m²/g] | Primärteilchengröße [µm] | Partikelgröße D50 [µm] | Wärmeleitfähigkeit [W/mK] |
|---|---|---|---|---|---|
| Beispiele: | | | | | |
| 1 | 98 | 0,8 | 2 | 70 | 1,2 |
| 2 | 98 | 1 | 2 | 4,16 | 0,99 |
| 3 | 98 | 1 | 3 | 5,43 | 0,95 |

| Vergleichsbeispiele: | | | | | |
|---|---|---|---|---|---|
| 4 | 98 | 2 | --- | 13,81 | 0,81 |
| 5 | 98 | 1,5 | 2 | 2,68 | 0,69 |
| 6 | 96 | 5 | 1,5 | 1.6 | 0,7 |
| 7 | 98 | 8 | 0,7 | 0,7 | 0,74 |
| 8 | 98 | 4,1 | 1,6 | 1,7 | 0,74 |
| 9 | 95 | 9 | 0,5 | 3 | --- |
| 10 | > 70 | 10 | 1 | 3 | --- |
| 11 | <2 | 150 | 1 | 6 | --- |

In dieser Tabelle sind neben der Probennummer zum Identifizieren der Proben (Proben 1 - 3 als erfindungsgemäße Beispiele und Proben 4 - 11 als Vergleichsbeispiele) der volumenbezogene Gehalt des Hilfsstoffs an alpha-Aluminiumoxid (α-Gehalt), die massenbezogene spezifische Oberfläche des Hilfsstoffs (BET), die mittlere Primärteilchengröße und die mittlere Partikelgröße des Hilfsstoffs (letztere als D50-Wert) sowie die Wärmeleitfähigkeit der resultierenden Wärmeleitungszusammensetzungen aufgeführt.

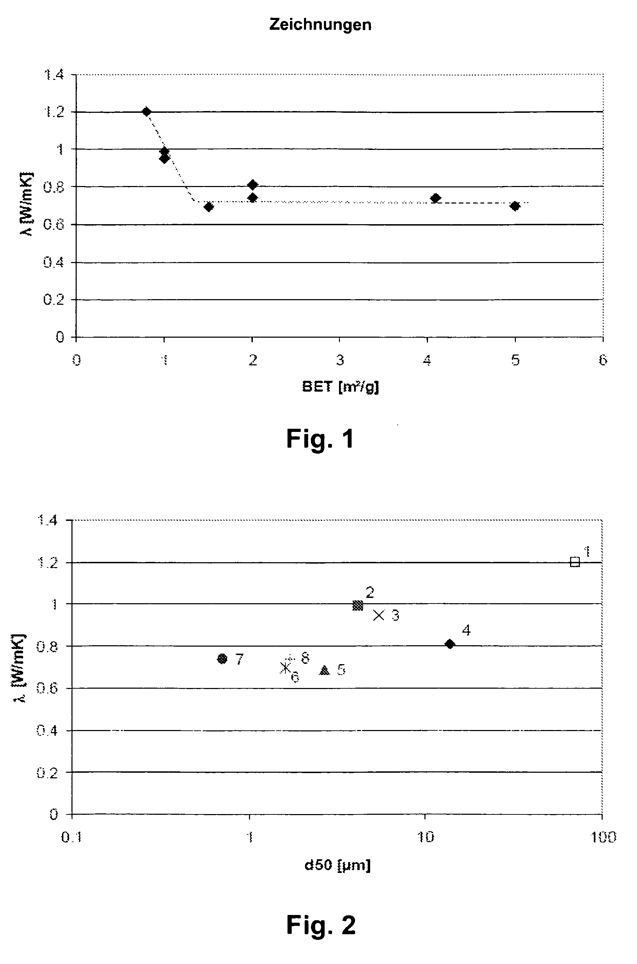

In Fig. 1 sind Ergebnisse aus Tabelle 1 für die Korrelation der Wärmeleitfähigkeit λ der Wärmeleitungszusammensetzung und der massegewichteten spezifischen Oberfläche (BET) des Hilfsstoffs dargestellt. Die Linie in Fig. 1 dient hierbei lediglich als visuelle Orientierungshilfe.

Aus Fig. 1 ist erkennbar, dass die Wärmeleitfähigkeit λ der Wärmeleitungszusammensetzung bei spezifischen Oberflächen von mehr als 1,5 m²/g in etwa konstant (etwa bei 0,56 W/mK) und somit von der Größe der spezifischen Oberfläche unabhängig ist. Bei spezifischen Oberflächen von weniger als 1,3 m²/g (Proben 1-3) steigt die Wärmeleitfähigkeit jedoch mit der Abnahme der spezifischen Oberfläche auf einen Wert von 1 W/mK oder sogar darüber an.

In Fig. 2 sind die Ergebnisse aus Tabelle 1 für die Korrelation der Wärmeleitfähigkeit λ der Wärmeleitungszusammensetzung und dem mittleren Partikeldurchmesser (D50) des Hilfsstoffs dargestellt. Aus Fig. 2 ist zu entnehmen, dass die Proben mit der kleinsten spezifischen Oberfläche (Proben 1, 2 und 3) zwar oberflächenbedingt deutlich höhere Wärmeleitfähigkeiten aufweisen als Proben mit einer größeren spezifischen Oberfläche (etwa Probe 4 und 5), dass die Wärmeleitfähigkeit jedoch nicht systematisch mit dem mittleren Partikeldurchmesser korreliert ist.

Zwar hängt auch die spezifische Oberfläche zu einem gewissen Grad von der Partikelgröße ab (ein großer Partikeldurchmesser führt tendenziell zu einer kleineren massebezogenen spezifischen Oberflächen). Dennoch spiegelt sich dieser Trend in den für die Proben 1-4 erhaltenen Ergebnissen nicht wieder, da die Proben 2 und 3 eine erheblich größere Wärmeleitfähigkeit besitzen als Probe 4, obgleich der Partikeldurchmesser in Probe 4 erheblich größer war. Demzufolge handelt es sich bei der Steigerung der Wärmeleitfähigkeit also tatsächlich um einen Effekt der spezifischen Oberfläche und nicht um einen Effekt der Partikelgröße. Dies wurde in weiteren Versuchsreihen auch für andere Proben bestätigt.

Darüber hinaus ist Tabelle 1 zu entnehmen, dass, wenn Acrylat-basierende Polymere als Wärmeleitungszusammensetzung verwendet wurden, es lediglich dann möglich war, praktisch einsetzbare Systeme zu erhalten, wenn der Gehalt an alpha-Aluminiumoxid sehr hoch war. So ließen sich die Wärmeleitungszusammensetzung der Proben 1 - 8, bei denen der Gehalt an alpha-Aluminiumoxid im Hilfsstoff größer als 95 % war, problemlos im Kneter abmischen und anschließend zu einem Klebefilm pressen. Bei Proben 9, 10 und 11 hingegen, in denen auch gamma- und/oder beta-Aluminiumoxid vorlag, trat bereits im Kneter eine starke Vernetzung der Wärmeleitungszusammensetzung ein, so dass die Proben unter der Presse nicht mehr als wärmeleitende Flächenelemente ausgeformt werden kann und somit auch keine Messungen der Wärmeleitfähigkeit an diesen Systemen durchführbar waren. Dies belegt die praktischen Vorteile von Hilfsstoffen, die Aluminiumoxid enthalten, das zu mehr als 95 Gew.-% in der alpha-Kristallstruktur vorliegt, insbesondere bei Acrylat-basierenden Wärmeleitungszusammensetzungen.

Die Bestimmung der Klebkraft auf unterschiedlichen Verklebungssubstraten wurde für eine unvernetzte Wärmeleitungszusammensetzung nach einer Verklebungsdauer von 14 Tagen durchgeführt, nämlich für Probe 2. Auf einem polaren Stahlsubstrat betrug die derart ermittelte Klebkraft 18,1 N/cm, auf einem Polyimidsubstrat 8,5 N/cm und auf einem unpolaren Polyethylensubstrat immerhin noch 0,75 N/cm. Die Ergebnisse der Klebkraftmessungen belegen, dass die exemplarisch ausgewählte Wärmeleitungszusammensetzung ein hinreichend gutes haftklebriges Verhalten zeigt und somit zur Herstellung eines haftklebrigen wärmeleitenden Flächenelements geeignet ist.

Die Prüfung der elektrischen Durchschlagsfestigkeit nach VDE 0100 wurde ebenfalls von allen erfindungsgemäßen Proben bestanden. Hieraus ist ersichtlich, dass die erfindungsgemäßen Wärmeleitungszusammensetzungen elektrisch nicht leitend sind und daher auch dort eingesetzt werden können, wo eine elektrische Isolierung von thermisch leitend verbundenen Komponenten gefordert ist, etwa in elektronischen Geräten.

Die Versuche belegen somit die hervorragende Eignung der erfindungsgemäßen Wärmeleitungszusammensetzungen sowie der damit hergestellten wärmeleitenden Flächenelemente als wärmeübertragende Systeme.

## Patentansprüche

1. Wärmeleitungszusammensetzung umfassend zumindest ein Polymer und einen wärmeleitenden Hilfsstoff,
wobei der wärmeleitende Hilfsstoff Partikel umfasst, die aus Primärteilchen aufgebaut sind und die eine massebezogene spezifische Oberfläche nach der BET-Methode von 1,3 m²/g oder weniger aufweisen.
**dadurch gekennzeichnet, dass**
die Wärmeleitungszusammensetzung als Haftklebemasse ausgebildet ist.

2. Wärmeleitungszusammensetzung nach Anspruch 1, **dadurch gekennzeichnet, dass** die Primärteilchen einen mittleren Durchmesser von mindestens 1 µm aufweisen, insbesondere von mindestens 2 µm.

3. Wärmeleitungszusammensetzung nach einem der Ansprüche 1 oder 2, **dadurch gekennzeichnet, dass** die Partikel des wärmeleitenden Hilfsstoffs eine massebezogene spezifische Oberfläche nach der BET-Methode von 1,0 m²/g oder weniger aufweisen.

4. Wärmeleitungszusammensetzung nach einem der Ansprüche 1 bis 3, **dadurch gekennzeichnet, dass** die Partikel des wärmeleitenden Hilfsstoffs zumindest im Wesentlichen Aluminiumoxidpartikel und/oder Bornitridpartikel umfassen.

5. Wärmeleitungszusammensetzung nach Anspruch 4, **dadurch gekennzeichnet, dass** die Aluminiumoxidpartikel zu einem Anteil von mehr als 95 Gew.-% aus alpha-Aluminiumoxid bestehen, insbesondere zu einem Anteil von 97 Gew.-% oder mehr.

6. Wärmeleitungszusammensetzung nach einem der Ansprüche 1 bis 5, **dadurch gekennzeichnet, dass** das Material des wärmeleitenden Hilfsstoffs eine Wärmeleitfähigkeit von mehr als 1 W/mK aufweist, insbesondere von mehr als 10 W/mK oder sogar von mehr als 25 W/mK.

7. Wärmeleitungszusammensetzung nach einem der Ansprüche 1 bis 6, **dadurch gekennzeichnet, dass** der wärmeleitende Hilfsstoff in der Wärmeleitungszusammensetzung zu einem Anteil von mindestens 5 Vol.-% und höchstens 70 Vol.-% vorliegt, insbesondere zu mindestens 15 Vol.% und höchstens 50 Vol.%, jeweils bezogen auf das Volumen des wärmeleitenden Hilfsstoffs in der Wärmeleitungszusammensetzung.

8. Wärmeleitungszusammensetzung nach einem der Ansprüche 1 bis 7, **dadurch gekennzeichnet, dass** die Partikel einen mittleren Durchmesser aus einem Bereich von 2 µm bis 500 µm aufweisen, insbesondere aus einem Bereich von 2 µm bis 200 µm, ganz besonders aus einem Bereich von 40 µm bis 150 µm.

9. Wärmeleitungszusammensetzung nach einem der Ansprüche 1 bis 8, **dadurch gekennzeichnet, dass** das zumindest eine Polymer ein Polymer auf der Basis von Acrylsäureestern, Methacrylsäureestern und/oder Derivaten davon ist.

10. Wärmeleitungszusammensetzung nach einem der Ansprüche 1 bis 9, **dadurch gekennzeichnet, dass** diese ferner einen weiteren Hilfsstoff mit einem Phasenübergangsmaterial umfasst.

11. Verwendung einer Wärmeleitungszusammensetzung nach einem der Ansprüche 1 bis 10 zur Herstellung eines wärmeleitenden Flächenelements.

12. Wärmeleitendes Flächenelement mit einer Wärmeleitungszusammensetzung nach einem der Ansprüche 1 bis 10.

13. Verwendung einer Wärmeleitungszusammensetzung nach einem der Ansprüche 1 bis 10 zum Wärmetransport innerhalb elektronischer Geräte.

## Claims

1. Thermal conduction composition comprising at least one polymer and a thermally conducting auxiliary, the thermally conducting auxiliary comprising particles which are composed of primary particles and which have a mass-based specific surface area according to the BET method of 1.3 m²/g or less,
**characterized in that**
the thermal conduction composition takes the form of a pressure-sensitive adhesive.

2. Thermal conduction composition according to Claim 1, **characterized in that** the primary particles have an average diameter of at least 1 µm, more particularly of at least 2 µm.

3. Thermal conduction composition according to either of Claims 1 and 2, **characterized in that** the particles of the thermally conducting auxiliary have a mass-based specific surface area according to the BET method of 1.0 m²/g or less.

4. Thermal conduction composition according to any of Claims 1 to 3, **characterized in that** the particles of the thermally conducting auxiliary at least substantially comprise aluminum oxide particles and/or boron nitride particles.

5. Thermal conduction composition according to Claim 4, **characterized in that** the aluminum oxide particles are composed in a fraction of more than 95% by weight of alpha-aluminum oxide, more particularly in a fraction of 97% by weight or more.

6. Thermal conduction composition according to any of Claims 1 to 5, **characterized in that** the material of the thermally conducting auxiliary has a thermal conductivity of more than 1 W/mK, more particularly of more than 10 W/mK or even of more than 25 W/mK.

7. Thermal conduction composition according to any of Claims 1 to 6, **characterized in that** the thermally conducting auxiliary is present in the thermal conduction composition in a fraction of at least 5% and not more than 70% by volume, more particularly of at least 15% and not more than 50% by volume, based in each case on the volume of the thermally conducting auxiliary in the thermal conduction composition.

8. Thermal conduction composition according to any of Claims 1 to 7, **characterized in that** the particles have an average diameter in a range from 2 µm to 500 µm, more particularly in a range from 2 µm to 200 µm, especially in a range from 40 µm to 150 µm.

9. Thermal conduction composition according to any of Claims 1 to 8, **characterized in that** said at least one polymer is a polymer based on acrylic esters, methacrylic esters and/or derivatives thereof.

10. Thermal conduction composition according to any of Claims 1 to 9, **characterized in that** it further comprises a further auxiliary with a phase change material.

11. Use of a thermal conduction composition according to any of Claims 1 to 10 for producing a thermally conducting sheetlike element.

12. Thermally conducting sheetlike element with a thermal conduction composition according to any of Claims 1 to 10.

13. Use of a thermal conduction composition according to any of Claims 1 to 10 for heat transport within electronic devices.

## Revendications

1. Composition thermoconductrice comprenant au moins un polymère et un adjuvant thermoconducteur, l'adjuvant thermoconducteur comprenant des particules formées à partir de particules primaires et présentant une surface spécifique par rapport à la masse selon le procédé BET de 1,3 m²/g ou moins, **caractérisée en ce que** la composition thermoconductrice est réalisée sous forme de masse autoadhésive.

2. Composition thermoconductrice selon la revendication 1, **caractérisée en ce que** les particules primaires présentent un diamètre moyen d'au moins 1 µm, en particulier d'au moins 2 µm.

3. Composition thermoconductrice selon l'une quelconque des revendications 1 ou 2, **caractérisée en ce que** les particules de l'adjuvant thermoconducteur présentent une surface spécifique par rapport à la masse selon le procédé BET de 1,0 m²/g ou moins.

4. Composition thermoconductrice selon l'une quelconque des revendications 1 à 3, **caractérisée en ce que** les particules de l'adjuvant thermoconducteur comprennent au moins essentiellement des particules d'oxyde d'aluminium et/ou des particules de nitrure de bore.

5. Composition thermoconductrice selon la revendication 4, **caractérisée en ce que** les particules d'oxyde d'aluminium sont constituées, à raison d'une proportion supérieure à 95% en poids, d'alpha-oxyde d'aluminium, en particulier à raison d'une proportion de 97% en poids ou plus.

6. Composition thermoconductrice selon l'une quelconque des revendications 1 à 5, **caractérisée en ce que** le matériau de l'adjuvant thermoconducteur présente une conductibilité thermique supérieure à 1 W/mK, en particulier supérieure à 10 W/mK ou même supérieure à 25 W/mK.

7. Composition thermoconductrice selon l'une quelconque des revendications 1 à 6, **caractérisée en ce que** l'adjuvant thermoconducteur dans la composition thermoconductrice est présent en une proportion d'au moins 5% en volume et d'au plus 70% en volume, en particulier d'au moins 15% en volume et d'au plus 50% en volume, à chaque fois par rapport au volume de l'adjuvant thermoconducteur dans la composition thermoconductrice.

8. Composition thermoconductrice selon l'une quelconque des revendications 1 à 7, **caractérisée en ce que** les particules présentent un diamètre moyen situé dans une plage de 2 µm à 500 µm, en particulier dans une plage de 2 µm à 200 µm, tout particulièrement dans une plage de 40 µm à 150 µm.

9. Composition thermoconductrice selon l'une quelconque des revendications 1 à 8, **caractérisée en ce que** ledit au moins un polymère est un polymère à base d'esters de l'acide acrylique, d'esters de l'acide méthacrylique et/ou de dérivés de ceux-ci.

10. Composition thermoconductrice selon l'une quelconque des revendications 1 à 9, **caractérisée en ce qu'**elle comprend en outre un autre adjuvant présentant un matériau à transition de phases.

11. Utilisation d'une composition thermoconductrice selon l'une quelconque des revendications 1 à 10 lors de la fabrication d'un élément plat thermoconducteur.

12. Elément plat thermoconducteur présentant une composition thermoconductrice selon l'une quelconque des revendications 1 à 10.

13. Utilisation d'une composition thermoconductrice selon l'une quelconque des revendications 1 à 10 pour le transport de chaleur dans des appareils électroniques.
